(19) Europäisches Patentamt
European Patent Office
Office européen des brevets

(11) **EP 4 040 363 A1**

(12) **EUROPEAN PATENT APPLICATION**

(43) Date of publication:
**10.08.2022 Bulletin 2022/32**

(21) Application number: **21155539.6**

(22) Date of filing: **05.02.2021**

(51) International Patent Classification (IPC):
**G06Q 30/00** (2012.01)

(52) Cooperative Patent Classification (CPC):
**G06Q 30/0185**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Nagravision SA
1033 Cheseaux-sur-Lausanne (CH)**

(72) Inventors:
• **VILLEGAS, Karine
1033 Cheseaux-sur-Lausanne (CH)**

• **GREMAUD, Fabien
1033 Cheseaux-sur-Lausanne (CH)**
• **DEVALLONNÉ, Luc
1033 Cheseaux-sur- Lausanne (CH)**
• **THOMAS, Frédéric
1033 Cheseaux-sur- Lausanne (CH)**

(74) Representative: **Poindron, Cyrille et al
Novagraaf International SA
Chemin de l'Echo 3
1213 Onex (CH)**

(54) **METHOD AND SYSTEM FOR CHECKING SYSTEM OF FIRST ELEMENT GROUPED WITH N SECOND ELEMENTS**

(57)     Checking a system (100) of a first element (E1) grouped with N second elements (E2$_i$), with N≥1, a public and private key pair being attributed to the first element (E1) and N attribute values (X$_i$) being stored in the N second elements (E2$_i$) respectively, includes:

receiving, at the first element (E1), a request to sign a message M from a sender;

computing a digital signature of the message M by using a modified private key, stored in the first element, and the N attribute values stored in the N second elements (E2$_i$), wherein the modified private key corresponds to said private key of the first element (E1) modified with the N attribute values;

transmitting the computed digital signature to the sender, to check the computed digital signature with the public key of the first element.

FIG. 1

**Description**

TECHNICAL FIELD

The present disclosure relates to a method for verifying a system including a first element (e.g., a container, a support or any element) grouped with N second elements (e.g., boxes put inside the container or components mounted on the support), in order to verify that the system has not been modified, such as during shipping or transit, a methods for configuring such a system, and the system itself. For example, such methods can be used during an operation of filling a container with boxes and when the container is received after shipping and transit to verify that the content of the container has not been altered during the transit.

BACKGROUND

In the field of logistics, the process of shipping or moving a shipment like a container including boxes from a point of origin to a point of destination needs to be secure. In particular, it is generally needed to guarantee that the content of the shipment has not been modified after shipping and transit, and to allow a fast, easy and safe control by a receiver at the point of destination.

In the automotive field, there is also a need to guarantee that all parts or components of a vehicle are still present in the vehicle and that no part has been removed or replaced by a spare part, for example after manufacture and delivery of the vehicle or during its lifetime.

The present disclosure improves the situation. First, it allows to verify that a group of a first element (e.g., a container or a support or any element) and one or more second elements (e.g., boxes put inside the container, components or parts assembled with the support) has not been illicitly modified, in a fast, easy and safe manner.

SUMMARY

The present disclosure concerns a method for checking a system of a first element grouped with N second elements, with N≥1, a public and private key pair being attributed to the first element and N attribute values being stored in the N second elements respectively, the method including the following steps:

receiving, at the first element, a request to sign a message M from a sender;
computing a digital signature of the message M by using a modified private key, stored in the first element, and the N attribute values stored in the N second elements, wherein the modified private key corresponds to said private key of the first element modified with the N attribute values;
transmitting the computed digital signature to the sender, in order to allow the sender to check the computed digital signature with the public key of the first element.

According to the present method, it is only when all the second elements are grouped with the first element that the first element can compute a correct (valid) digital signature of the message M with its private key. Thanks to that, the sender can easily check that all the second elements are grouped with the first element with the first element's public key, without need to verify manually the system. If one (or more) second element is missing, the digital signature computed by the first element is not valid and consequently the sender is not able to validly verify it with the public key of the first element. It is only when the first element and all the N second elements are grouped that the first element can produce a signature of the message that is valid and can be correctly verified with the public key of the first element.

In a particular use case, the first element can be a container and the second elements can be items, for example boxes, put inside the container. When one box has been removed illicitly, the digital signature computed by the first element does not comprise the portion of the digital signature corresponding to this removed box. Consequently, the signature of the message computed by the first element is not valid and the sender will not be able to validly verify this signature of the message with the public key of the first element. In addition, there is no need to open the container to check its content.

Advantageously, the first element receives N portions of the digital signature, respectively computed using the N attribute values stored in the N second elements, and computes a last portion of the digital signature by using the modified private key (stored in the first element), in order to compute the digital signature of the message M.

The N second elements can produce N respective elementary signatures, by using their respective attribute values. These elementary signatures correspond to portions of the target digital signature of the message M (in other words: the signature computed with the private key of the first element). The first element produces a last portion of the signature with the stored modified private key to finalize the computation of the target digital signature.

The first element can compute the digital signature of the message M by performing a mathematical operation that takes as inputs said N portions of the digital signature and said last portion of the digital signature, said mathematical operation reconstructing the private key of the first element.

In some embodiments, the N second elements being composed of a part A of second elements and a part B of second elements, with only the second elements of the part A capable of computing a digital signature, each second element of the part B transmits the attribute value stored in said second element to another second element of the part A and delegates the computation of the portion of the signature corresponding to said second element of the part B to said other second element of the part A.

Thus, all second elements do not need to have the computational capacity of computing a digital signature. A second element without computation capacity can delegate the computation of its digital signature (i.e., the corresponding portion of the target signature) to another second element having the necessary computational capacity.

Each second element emits a radio signal and determines a neighborhood information by using the N-1 radio signals received from the N-1 other second elements; the neighborhood information determined by each second element is compared with a reference neighborhood information, in order to check that the relative positions of the second elements are correct.

The neighborhood information of each second element corresponds to a position signature or image of this second element. When the system is checked, this position signature is checked by comparison with a reference position signature that can have been initially determined at the end of an operation of grouping the first element and the N second elements.

For each of the N second elements, at least one characteristic of said second element of the group including a position, a volume, a weight and a temperature, can be determined and compared to a reference value or range, in order to check the system.

The present disclosure also concerns a method for configuring a system of a first element grouped with N second elements, with N≥1, a public and private key pair being attributed to the first element, comprising the following steps:

- initially storing said private key in the first element;
- for each of the N second elements, providing an attribute value to said second element, storing said attribute value in said second element and modifying the private key of the first element with the attribute value.

Advantageously, the steps of attributing, storing and modifying, performed for each second element, are executed upon grouping said second element with the first element.

The first element has a private key. This private key can be altered (or modified) during the operation of grouping the first element with the second elements. In the particular use case of a container, the private key of the container can be altered during the filling operation by items like boxes. When each second element is added to the group (e.g., when each item is added into the container), an attribute value is attributed to the new second element and the private key of the container is modified.

In case that a second element is removed from the system in an authorized manner, the modified private key stored in the first element can be updated so as to remove the modification with the attribute value of said removed second element.

The attribute value of each second element can be defined by at least one value of the group including a random value, a physical characteristic value and a position value. For example, a random (or pseudo-random) value is generated for each second element added to the group and attributed to said second element that stores it in memory.

The present disclosure also concerns a system of a first element grouped with N second elements, with N≥1, a public and private key pair being attributed to the first element, wherein

- each of the N second elements has a memory storing an attribute value of said second element,
- the first element has

  . a memory storing a modified private key corresponding to said private key modified with the N attribute values, and

  . hardware means and software means for receiving a request to sign a message M from a sender, computing a digital signature of said message M by using said modified private key and said N attribute values of the N second elements, and transmitting the computed digital signature to the sender, in order to allow the sender to check the computed digital signature with the public key of the first element.

Advantageously, the first element has hardware means and software means for receiving N portions of the digital signature, respectively computed using the N attribute values of the N second elements, and for computing a last portion of the digital signature by using the modified private key, in order to compute said digital signature of the message M.

In some embodiments, the N second elements are composed of a part A of second elements and a part B of second elements, only the second elements of the part A have hardware means and software means for computing a digital signature,

each second element of the part B is configured to transmit the attribute value stored in said second element to another second element of the part A and delegate the computation of the portion of the signature corresponding to said second element of the part B to said other second element of the part A.

Advantageously, each second element has a radio transceiver for emitting a radio signal and receiving N-1 radio signals from the N-1 other second elements and is configured to determine a neighborhood information by using the N-1 received radio signals;

the first element stores in memory, a reference neighborhood information for each of the N second elements.

The first element can be a container or a support and the N second elements are put inside or on the first element respectively. Alternatively, the set of second elements can constitute the first element, or the first and second elements can be grouped all together so as to form an assembly of elements.

BRIEF DESCRIPTION OF THE DRAWINGS

Other features, purposes and advantages of the disclosure will become more explicit by means of reading the detailed statement of the nonrestrictive embodiments made with reference to the accompanying drawings.

Figure 1 represents schematically a system including a first element grouped with N second elements, according to a particular embodiment.

Figure 2 represents a flow chart of a method for creating and configuring the system of figure 1, according to a particular embodiment.

Figure 3 represents a flow chart of a method for checking the system of figure 1, according to a first embodiment.

Figure 4 represents a flow chart of a method for checking the system of figure 1, according to a third embodiment.

DETAILED DESCRIPTION

First Embodiment

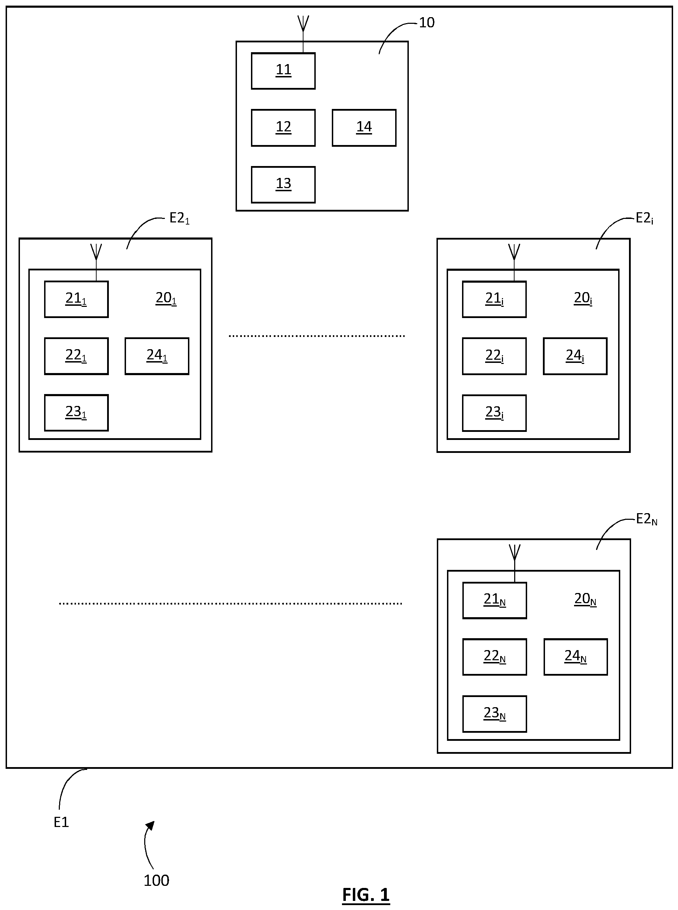

Figure 1 shows a system, or group, 100 according to a first embodiment including a first element grouped with N second elements, with N≥1. Various examples of the first and second elements are given below. However, these examples are only illustrative and non-exhaustive.

In a first example, the first element is a container, or a hosting element, and the N second elements are boxes or elements put inside the container, or inside the hosting element.

In a second example, the first element is a support and the N second elements are components mounted or put on the support. The support can be defined as a main or base component of a mechanical and/or electronic system (such as a frame component), onto which other components are fitted or mounted or assembled.

For example, the support is a chassis of a motor vehicle and the second elements are mechanical components (such as tires, seats, wheels, etc.) and/or electronic components (sensors, calculators, displays, etc.) assembled with the chassis.

In another example, the support is a bicycle frame, that is a main component of a bicycle, and the second elements are the wheels and other components of the bicycle that are fitted onto the bicycle frame.

The first element can be a mix of a container, or hosting element, and a support. For example, the first element can be a house and the second elements can be a plurality of goods of occupants in the house.

In a third example, the first element and the N second elements are all components that are assembled to form the system 100 (in other words: a group of elements).

The first element E1 has hardware means (in other words: hardware components) and software means (in other words: software components) to perform the steps of the configuration method and the steps of the method for checking the system 100, described later, that are executed by the first element E1. In a particular embodiment, the hardware means and software means of the first element E1 are hardware component(s) and software component(s) of an integrated circuit IC 10, such as a chip or a SoC (system on chip). The IC 10 is fixed to the first element E1. It can be concealed for security reason. Alternatively, or additionally, the IC 10 can be fixed to the first element E1 in an inviolable manner, so that any attempt to separate the IC 10 from the first element E1 would result in a destruction of the IC 10.

A public and private key pair (Kpub, Kpriv) has been generated for the first element E1. Thus, a pair of a public key Kpub and a private key Kpriv is attributed to the first element E1.

The IC 10 of the first element E1 includes:

- a radio (or wireless) transceiver 11;
- a memory 12 for storing the private key Kpriv or a modified private key $Kpriv_N$ (or $Kpriv_i$ with with $1 \leq i < N$), as explained later;
- a memory 13 storing software instructions (that make up one or more computer programs) to cause the IC 10 to execute the steps of the configuration method and the steps of the method for checking the system 100 that are performed by the first element E1;
- a processor 14, or CPU (central processing unit), that can execute the instructions stored in the memory 13.

In particular, the IC 10 of the first element E1 has a function of computing a digital signature of a message (or a data) by using a modified private key, typically $Kpriv_N$, stored in the memory 12 of the first element E1, and the N attribute values $X_i$ of the N second elements respectively.

The second elements $E2_i$, with $1 \leq i \leq N$, have also hardware means (in other words: hardware components) and software means (in other words: software components) to perform the steps of the configuration method and the steps of the method for checking the system 100, described later, that are executed by the second elements $E2_i$. These hardware means and software means of the second elements $E2_i$ can be components of an integrated circuit $IC 20_i$, such as a chip or a SoC (system on chip). The $IC 20_i$ is mounted on the corresponding second element $E2_i$. For security reason, it can be concealed and/or fixed to the second element $E2_i$ in an inviolable manner, so that any attempt to separate the $IC 20_i$ from the second element $E2_i$ would cause a destruction of the $IC 20_i$.

The $IC 20_i$ of each second element $E2_i$, with $1 \leq i \leq N$, includes:

- a radio (or wireless) transceiver $21_i$;
- a memory $22_i$ storing an attribute value $X_i$ of said second element $E2_i$.

The attribute value $X_i$ of each second element $E2_i$ can be a random value generated and attributed to the second element $E2_i$ in an operation of grouping the second element $E2_i$ with the first element E1, as will be described later in the description of the configuration method. Alternatively, or additionally, the attribute value $X_i$ can comprise a physical characteristic value and/or a position value of the second element $E2_i$, as explained later. In other words, the attribute value $X_i$ can comprise one of the items of the group including a random value, a physical characteristic value and a position value, or a mix of these different items (or values).

The modified private key $Kpriv_N$ of the first element E1 corresponds to the private key Kpriv of the first element E1 modified with the N attribute values $X_i$ with $1 \leq i \leq N$, as will be described in more detail later.

In a first embodiment, the $IC 20_i$ of each second element $E2_i$ further includes:

- a memory $23_i$ storing software instructions (that make up one or more computer programs) to cause the $IC 20_i$ to execute the steps of the configuration method and the steps of the method for checking the system 100 that are performed by the second element $E2_i$;
- a processor $24_i$, or CPU (central processing unit), that can execute the instructions stored in the memory $23_i$.

In the first embodiment, the $IC 20_i$ of each second element $E2_i$ has a function of computing a digital signature of a message M (or data), noted $S_{Mi}$, by using said attribute value $X_i$ of the second element $E2_i$, and transmitting the computed digital signature $S_{Mi}$ to the first element E1, in order to allow the first element E1 to compute a digital signature $S_M$ of the message M with the private key Kpriv, as will be explained later in more detail.

The first element E1 and each of the second elements $E2_i$ can communicate with each other, via a radio (or wireless) link (through the radio transceivers 11, $21_i$), typically via a short-range communication. In addition, the first element E1 has the capability to communicate with a device or system external to the group 100 of the first and second elements E1, $E2_i$ with $1 \leq i \leq N$.

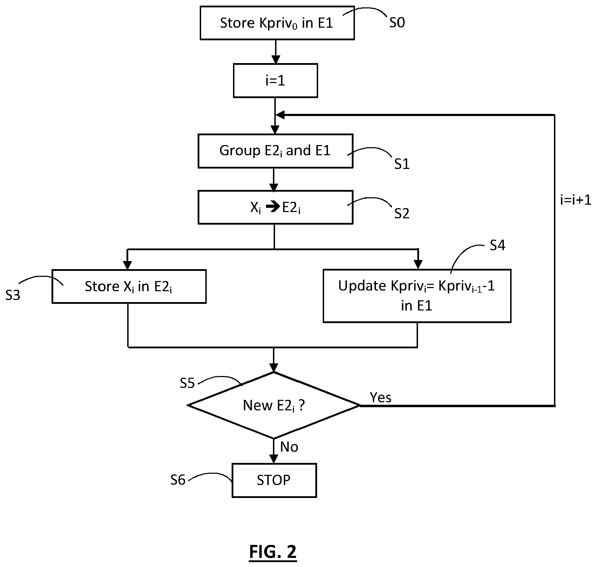

The operation of grouping the first element E1 with the N second elements $E2_i$, with $1 \leq i \leq N$, and the configuration method for configuring the system 100, according to a first embodiment, will now be described with reference to figure 2.

In an initial step S0, an initial private key, noted $Kpriv_0$, that is equal to the private key Kpriv of the first element E1, is stored in the memory 12 of the first element E1.

Then, the operation of grouping the first element E1 with the N second elements $E2_i$ is started. This operation can consist in:

- filling a container (as the first element E1) with items (as the second elements $E2_i$) like boxes, articles, components, devices, etc., or
- mounting components (as the second elements $E2_i$) on a support (as the first element E1), or

- assembling all together components (first and second elements E1, E2$_i$), so as to form the system 100.

In a step S1, a second element E2$_i$ is grouped with the first element E1. The index i is initially set to 1. Then, the steps S2 to S5, described below, are executed. The set of the steps S1 to S5 is repeated for each index i from 1 to N.

In the step S2, an attribute value X$_i$ is provided to the second element E2$_i$.

In the first embodiment, the attribute value X$_i$ is a random or pseudo-random value generated for each second element E2$_i$ in the step S1. It is generated by the first element E1. The processor 14 of the first element E1 executes an algorithm generating random numbers or pseudo-random numbers. The random or pseudo-random value can be an integer, especially if needed or preferred for the digital signature computation.

Alternatively, in a variant of the first embodiment, the attribute value X$_i$ of each second element E2$_i$ could be generated by the second element E2$_i$ itself, more precisely by the processor 24$_i$ of the second element E2$_i$ executing an algorithm for generating a random or pseudo-random value.

In the first embodiment, in a step S3, the attribute value X$_i$ of each second element E2$_i$ is stored in the memory 22$_i$ of this second element E2$_i$, after a radio (or wireless) transmission from the first element E1 to the second element E2$_i$.

Additionally, in a step S4, the modified private key stored in the first element E1 is updated (for each new second element E2$_i$ added into the group). More precisely, the first element E1 modifies its stored private key (stored in the memory 12) with the attribute value X$_i$ of the second element E2$_i$. In other words, when the second element E2i is added to the group, the current value Kpriv$_{i-1}$ of the modified private key is modified with the attribute value X$_i$ to produce the next value Kpriv$_i$ of the modified private key. The new value Kpriv$_i$ of the modified private key is stored in the memory 12 of the first element E1. The previous value Kpriv$_{i-1}$ of the modified private key is preferably erased from the memory 12 of the first element E1, for security reason.

The modification to the private key of the first element E1 due to each second element E2$_i$ depends on the type of algorithm for computing the digital signature. In the first embodiment, a RSA algorithm is used for computing a digital signature. In that case, the modification of the private key of the first element E1 due to each second element (in other words: the contribution of each second element E2$_i$ to the modification of the initial private key Kpriv$_0$ of the first element E1) can be expressed as follows:

$$Kpriv_i = Kpriv_{i-1} - X_i \hspace{4cm} (1)$$

with $1 \leq i \leq N$.

Thus, when N second elements E2$_i$ have been grouped with the first element E1, the modified private key Kpriv$_N$ can be expressed by the following relation:

$$Kpriv_N = Kpriv_0 - \sum_{i=1}^{N} X_i \hspace{4cm} (2)$$

In a step S5, it is checked whether or not a new second element E2$_i$ is added to the system 100.

In case of a positive event, the method goes back to the step S1 and the steps S1 to S4 are executed again for the new element E2$_{i+1}$.

In case of a negative event, here when all the N second elements have been grouped with the first element E1, the configuration method ends in a step S6.

The steps S2, S3 and S4 are executed for each second element E2$_i$ that is grouped with the first element E1, typically upon grouping each second element E2$_i$ with the first element E1 (in other words: when or just after the second element E2$_i$ is grouped with the first element E1). However, alternatively, all the second elements E2$_i$ could be grouped before the steps S2, S3 and/or S4 are performed.

In case that a second element E2$_j$, with $1 \leq j \leq N$, is removed from the system 100 in an authorized manner, the modified private key Kpriv$_N$ stored in the first memory of the first element 1 could be partially restored (in other words: updated) so as to remove the modification with the attribute value X$_j$ of this removed second element E2$_j$. In case of a RSA signature, the update of the modified private key Kpriv$_N$ can be expressed as follows:

$$Kpriv_{N-1} = Kpriv_N + X_j \hspace{4cm} (3)$$

In a variant of the first embodiment, the attribute value X$_i$ of each second element E2$_i$ is defined by one or more values of the group including a random value, a physical characteristic value and a position value. In other words, the attribute value X$_i$ can comprise a random value, a physical characteristic value and/or a position value. It can be computed by an arithmetic or logical operations taking as inputs different values.

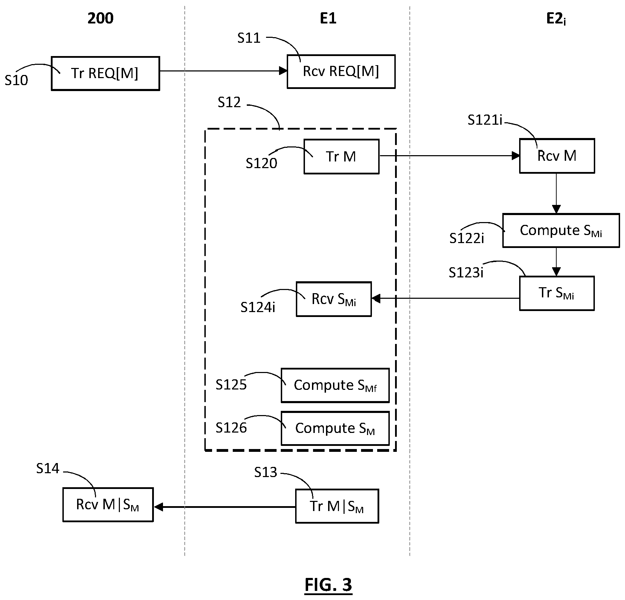

The operation of checking the system 100 according to a first embodiment will now be described with reference to figure 3.

In the first embodiment, the purpose of checking the system 100 is to verify the integrity of its content and have the assurance that the content of the system 100 is intact and has not been modified after the grouping of the first element E1 and the second elements $E2_i$.

The process of checking the system 100 includes a first step S10 of transmitting a request REQ[M] to sign a message M (in other words: a data) from a sender 200 to the first element, typically via a wireless communication. The request includes the message M (or the data) to be signed.

The sender 200 is typically a user equipment provided with a wireless communication interface, and hardware and software components to perform the steps of the checking method that are performed by the sender 200.

In a step S11, the first element E1 receives the request REQ[M].

In a step S12, the first element E1 computes a digital signature $S_M$ of the message M, by using the modified private key $Kpriv_N$, stored in the first element E1, and the N attribute values $X_i$ stored in the N second elements $E2_i$, with $1 \leq i \leq N$.

The computation of the digital signature $S_M$ can comprise the different steps S120 to S126, described below.

Firstly, in the first embodiment, the first element E1 broadcasts the message M to the N second elements $E2_i$ and requests them to sign the message M, in the step S120. In steps $S121_i$, with $1 \leq i \leq N$, each second element $E2_i$ receives the message M to sign.

Then, in a step $S122_i$, each second element $E2_i$ computes a digital signal $S_{Mi}$ that corresponds to a portion of the signature $S_M$ of the message M ($S_M$ representing the signature of the message M with the private key Kpriv of the first element E1). The portion of signature $S_{Mi}$ corresponds to the contribution of the second element $E2_i$ to the global signature $S_M$.

For example, the system 100 uses a RSA signature algorithm, and the public key Kpub of the first element E1 consists of a modulus n and a public (or encryption) exponent e. In other words:

$$Kpub = (n, e) \qquad (4)$$

In that case, the digital signal $S_{Mi}$ of each second element $E2_i$ is computed based on the following expression:

$$S_{Mi} = M^{X_i}(mod\ n) \qquad (5)$$

where

M is the message to sign;
$X_i$ is the attribute value of the second element $E2_i$;
n is the modulus of the public key Kpub of the first element E1.

In a step $S123_i$, each second element $E2_i$ transmits the computed digital signature $S_{Mi}$ to the first element E1.

The steps $S121_i$ to $S123_i$, with $1 \leq i \leq N$, can be performed in parallel by the N second elements.

Then, in steps $S124_i$, with $1 \leq i \leq N$, the first element E1 receives the N computed signatures $S_{Mi}$ from the N second elements $E2_i$, respectively. Thus, the first element E1 has the N computed signatures $S_{Mi}$ of the N second elements $E2_i$. These N signatures $S_{Mi}$ correspond to N portions of the global signature $S_M$ of the message M with the private key Kpriv of the first element E1.

In a step S125, the first element E1 computes a last or final portion $S_{Mf}$ of the global signature $S_M$ with the modified private key $Kpriv_N$. This portion of signature $S_{Mf}$ corresponds to the contribution of the first element E1 to the global signature $S_M$. The computation of the last or final portion of signature $S_{Mf}$ is based on the following expression:

$$S_{Mf} = M^{Kpriv_N}(mod\ n) \qquad (6)$$

where

M is the message to sign;
$Kpriv_N$ is the modified private key stored in the first element;
n is the modulus of the public key Kpub of the first element.

The step S125 can be executed at any moment after the request REQ[M] to sign the message M. For example, the last portion of signature $S_{Mf}$ can be computed after collecting the N portions of signature $S_{Mi}$ from the N second elements $E2_i$ in steps $S124_i$, or in parallel to the computation of the N portions of signature $S_{Mi}$, or before sending the message M to the N second elements $E2_i$.

Then, in a step S126, the first element E1 finalizes the computation of the target signature $S_M$ of the message M by using the N portions of signature $S_{Mi}$ with $1 \leq i \leq N$, and the final portion of the signature $S_{Mf}$. More precisely, in the present embodiment, as the system 100 uses a RSA signature algorithm, the digital signature $S_M$ of the message M with the private key Kpriv of the first element E1 is computed by multiplying together the N portions of signature $S_{Mi}$ with $1 \leq i \leq N$, and the final portion of the signature $S_{Mf}$, as expressed below:

$$S_M = \prod_{i=1}^{N} S_{Mi} * S_{Mf} \bmod n = S_{M1} * \dots * S_{MN} * S_{Mf} \bmod n \qquad (6)$$

In the RSA scheme, the computation of the target digital signature $S_M$ by multiplying the N+1 portions of signature $S_{M1}, \dots, S_{MN}, S_{Mf}$ allows to reconstruct the private key Kpriv of the first element E1 by addition of the exponents of the message M in the expressions (5) and (6), these exponents incuding $X_1, \dots, X_N$ and $Kpriv_N$, as follows:

$$K_{priv} = \sum_{i=1}^{N} X_i + Kpriv_N \qquad (7)$$

More generally, the first element E1 computes the target digital signature $S_M$ of the message M by performing a mathematical and/or logical operation that takes as inputs the N portions of the digital signature $S_{Mi}$ and the last portion of the digital signature $S_{Mf}$, the operation reconstructing the private key Kpriv of the first element E1. The digital signature algorithm could also be any ECC signature based algorithm or any other signature scheme (including Quantum resistant signature algorithms) enabling such kind of mechanism.

In a step S13, the first element E1 transmits the signature $S_M$ of the message M to the sender 200, typically via a wireless communication. For example, the first element transmits the signed message $M|S_M$, created by appending the digital signal $S_M$ to the original message M. The sender can hold the message M initially transmitted. In that case, the first element E1 can only transmit the signature $S_M$ of the message M (without the message M) to the sender 200. Alternatively, the first element E1 can transmit the signature $S_M$ of the message M with the hash of the message M or any other element typically produced using the message M.

In a step S14, the sender 200 receives the signed message $M|S_M$ from the first element E1. In other words, the sender 200 receives both the message M and the signature $S_M$.

Then, the sender 200 verifies the authenticity of the signed message M by using uses the public key Kpub of the first element E1. More precisely, the sender 200 processes on the digital signature $S_M$ and the public key Kpub of the first element by using a signature verification algorithm to generate a data, and then verifies that this data matches the original message M.

In the present embodiment using a RSA signature, the message M has been signed by computing the signature $S_M$ such that $S_M \equiv M^{Kpriv}(\bmod n)$ and, to verify the authenticity of the signature, the sender checks that $S_M{}^e \equiv M(\bmod n)$, where n and e are respectively the modulus and the exponent of the public key Kpub of the first element E1.

In the first embodiment, the digital signature implemented by the first element E1 and the second elements $E2_i$ is based on the RSA algorithm. Alternatively, another algorithm for generating a digital signature could be used. For example, the digital signature could be generated by means of a hash function, or a digital signature algorithm based on ECC (elliptic curve cryptography), or a digital signature scheme based on hash trees, or a quantum-safe cryptographic algorithm, etc.... In other words, RSA is only an illustrative example of an algorithm for generating a digital signature. When another algorithm is used, the modification of the private key of the first element with the attribute values of the second elements and the computation of the signature of the message M using the modified private key $Kpriv_N$ and the attribute values of the second elements need to be adapted to this specific algorithm.

The sender 200 could be connected to the first element E1 via a wired connection.

Second Embodiment

A second embodiment is based on the first embodiment and only differs from the first embodiment by the features described below.

In the second embodiment, the N second elements are composed of a part A of N1 second elements $E2_i$ and a part B of N2 second elements $E2_j$, with N1+N2=N. Only the second elements $E2_i$ of the part A can compute a digital signature. It means that only the N1 second elements $E2_i$ of the part A have hardware means and software means for computing a digital signature.

Each of the second elements $E2_i$ of the part A has a radio transceiver $21_i$, a memory $22_i$ for storing the attribute value $X_i$ of this second element, a memory $23_i$ for storing program (software) instructions and a processor or CPU $24_i$ capable of computing a digital signature.

The second elements $E2_j$ of the part B have limited capabilities. More precisely, in the second embodiment, each second element $E2_j$ of the part B has only a radio transceiver $21_i$ and a memory $22_i$ for storing its attribute value $X_i$. It is not able to compute a digital signature.

In that case, in operation, when a message M has to be signed by the system 100 typically during a checking operation of the system 100, each of the N2 second elements $E2_j$ of the part B transmits its own attribute value Xj (stored in memory 22j) to another second element $E2_i$ of the part A and delegates the computation of the portion of the signature corresponding to this second element $E2_j$ of the part B to this other second element $E2_i$ of the part A. The N1 second elements $E2_i$ of the part A globally compute and transmit to the first element E1 the N computed digital signatures $S_{Mi}$ with $1 \leq i \leq N$ (in other words: the N portions of signature $S_{Mi}$ with $1 \leq i \leq N$).

It means that a second element $E2_i$ of the part A, to which one or more other second element(s) $E2_j$ of the part B delegate(s) the computation of the digital signature, computes and then transmits to the first element E1 :

- its own digital signatures $S_{Mi}$ of the message M, and
- the digital signature(s) $S_{Mj}$ of the one or more other second element(s) $E2_j$ of the part B.

Third Embodiment

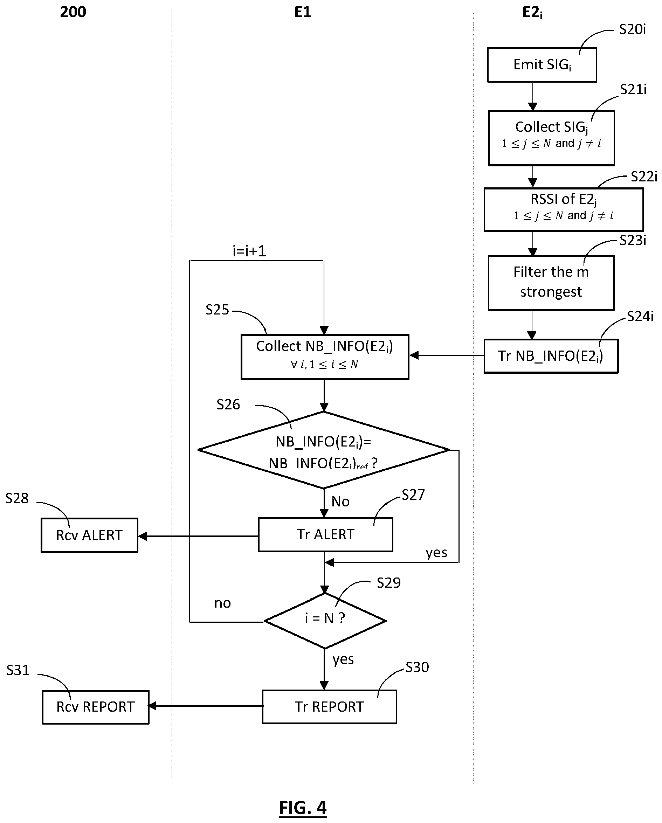

A third embodiment, illustrated in figure 4, is based on the first embodiment or on the second embodiment, and only differs from this embodiment by the features described below.

In the third embodiment, during the checking operation, each second element $E2_i$, with $1{\leq}i{\leq}N$, emits a radio signal $SIG\_E2_i$ that includes an identification information of the emitting second element $E2_i$, for example its universally unique identifier $UUID\_E2_i$, in a step $S20_i$.

Furthermore, in a step $S21_i$, each second element $E2_i$ collects the N-1 radio signals $SIG\_E2_j$ emitted by the N-1 other second elements $E2_j$ of the system or group 100, with $1 \leq j \leq N$ and $j \neq i$. The second element $E2_i$ can determine a RSSI (for "Received Signal Strength Indicator") of each of the N-1 received radio signals $SIG\_E2_j$ (in other words: the Received Signal Strength Indicators of N-1 radio signal $SIG\_E2_j$ from the N-1 other second elements $E2_j$), in a step $S22_i$. By definition, the RSSI of a received radio signal is a measurement of the power present in the received radio signal.

In a step $S23_i$, each second element $E2_i$ determines a neighborhood information $NB\_INFO\_E2_i$ by using the N-1 received radio signal $SIG\_E2_j$. This neighborhood information of each second element $E2_i$ can be determined in different manners. For example, based on the determined RSSIs of the N-1 received radio signals $SIG\_E2_j$ (with $1 \leq j \leq N$ and $j \neq i$), the second element $E2_i$ can filter (in other words: select) the m strongest received radio signals and store the corresponding second element identifiers, in other words a set of m identifiers (e.g., UUIDs) of the second elements $E2_j$ that emitted the m strongest received radio signals. This set of m identifiers of the m most relevant neighbors $E2_j$ can constitute the neighborhood information $NB\_INFO\_E2_i$ of the second element $E2_i$. For example, the number m is chosen between 3 and 20, for example it is equal to 5 or 10.

Then, in a step S24i, the neighborhood information $NB\_INFO\_E2_i$ determined by each second element $E2_i$ is transmitted from this second element $E2_i$ to the first element E1, via a wireless communication.

In a step S25, the first element E1 collects the neighborhood information $NB\_INFO\_E2_i$ of each of the second element $E2_i$, with $1 \leq i \leq N$, via wireless communications.

In a step S26, the first element E1 compares the neighborhood information $NB\_INFO(E2_i)$ of each second element $E2_i$ (with $1 \leq i \leq N$) with a reference neighborhood information $NB\_INFO(E2_i)_{ref}$ of this second element $E2_i$ that is for example stored in memory in the first element E1.

The reference neighborhood information of each second element $E2_i$ corresponds to an original (in other words: initial) neighborhood information of this second element $E2_i$, as determined in a configuration operation, typically at the end of the act of grouping the first element E1 and the N second elements $E2_i$. In the configuration operation, the reference neighborhood information $NB\_INFO(E2_i)_{ref}$ of each second element $E2_i$ is determined by performing the steps $S20_i$ to $S24_i$. In the step S26, for each second element $E2_i$, the first element E1 verifies whether or not the collected neighborhood information of this second element $E2_i$ is similar to the reference neighborhood information of this second element $E2_i$. In case of a positive verification, the first element E1 determines that the relative positions of the second elements $E2_i$ has not been modified and the process can go to a next step S29. In case of a negative verification, the first element E1 determines that the relative positions of the second elements $E2_i$ has been modified and notifies this information to the sender 200 by transmitting an alert message to the sender 200, in a step S27. In a step S28, the alert message is received by the sender 200. Then, the process can go to the step S29. In the step S29, it is determined if the neighborhood information of all the N second elements $E2_i$, with $1{\leq}i{\leq}N$, has been checked. In case of a positive event, the process can go to a step S30 of transmission of a report message to the sender 200. The report is received by the sender in a step S31. In case of a negative event, the process increments the index i and goes back to the step S25 and executes the steps S25 and following with the next index i+1. When the neighborhood information of each second element E2$_i$ is identical to the corresponding reference neighborhood information, the report message can indicate that the system 100 has been successfully verified (in other words: no modification to the system has been detected). When the neighborhood information of one or more second element E2$_i$ is not similar to the corresponding reference neighborhood information, the report message can indicate that the verification of the system 100 has failed (in other words: one or more modifications to the system has been detected). The failure report message can replace the alert message in the steps S27-S28.

As previously described in the second embodiment, some of the N second elements E2$_i$ may have limited capabilities. In that case, after reception of the N-1 radio signals from the N-1 other second elements E2$_j$ (with $1 \leq j \leq N$ and $j \neq i$) and determination of the RSSIs of the N-1 received radio signals SIG_E2$_j$, the second element E2$_i$ with limited capabilities can transmit the determined RSSIs and delegate the determination of the neighborhood information to another second element E2$_l$ having more capabilities.

The checking operation as described above, based on the neighborhood information, could be performed alone to check the system 100 (i.e., without performing the checking operation based on the digital signatures as described in the first embodiment).

Fourth Embodiment

A fourth embodiment is based on the first or second embodiment and only differs from this embodiment by the features described below.

In the fourth embodiment, the attribute value X$_i$ of each second element E2$_i$ is defined by at least one value of the group including a random value, a physical characteristic value (temperature, weight, volume, pression, etc.) of the second element E2$_i$ and a position value of the second element E2$_i$. The attribute value X$_i$ can result from arithmetic operations and/or algebraic and/or logical operations taking as inputs one or more values of the group including a random value, a physical characteristic value (temperature, weight, volume, pression, etc.) and a position value.

In a variant, the attribute value of each second element E2$_i$ can be modified (or altered) over time when a physical characteristic value and/or a position value of the second element E2$_i$ changes improperly. For example, the attribute value X$_i$ of a second element E2$_i$ can be altered when it is detected that the temperature of this second element E2$_i$ deviates from a recommended temperature or a recommended range of temperature, so that the digital signature of the message M cannot be correctly computed with the private key Kpriv of the first element.

Fifth Embodiment

A fifth embodiment is based on any of the preceding embodiments and only differs from this embodiment by the features described below.

In the fifth embodiment, in the checking operation, each of the N second elements E2$_i$, determines at least one characteristic of the group including a position of this second element E2$_i$ and a physical characteristic (such as a volume, a weight and a temperature, etc.) of this second element E2$_i$. Then, the second element E2$_i$ transmits the determined characteristic(s) to the first element E1 that compares the determined characteristic(s) to reference value(s) or range(s), in order to check that the system 100 has not been modified.

**Claims**

1. A method for checking a system (100) of a first element (E1) grouped with N second elements (E2$_i$), with N≥1, a public and private key pair (Kpub, Kpriv) being attributed to the first element (E1) and N attribute values (X$_i$) being stored in the N second elements (E2$_i$) respectively, the method including the following steps:

   receiving, at the first element (E1), a request (REQ[M]) to sign a message M from a sender (200);
   computing (S125) a digital signature (S$_M$) of the message M by using a modified private key (Kpriv$_N$), stored in the first element (E1), and the N attribute values (X$_i$) stored in the N second elements (E2$_i$), wherein the modified private key (Kpriv$_N$) corresponds to said private key (Kpriv) of the first element (E1) modified with the N attribute values (X$_i$);
   transmitting (S13) the computed digital signature (S$_M$) to the sender (200), in order to allow the sender (200) to check the computed digital signature (S$_M$) with the public key (Kpub) of the first element (E1).

2. The method according to claim 1, wherein the first element (E1) receives (S124$_i$) N portions (S$_{Mi}$) of the digital

signature ($S_M$), respectively computed using the N attribute values ($X_i$) stored in the N second elements ($E2_i$), and computes a last portion ($S_{Mf}$) of the digital signature ($S_M$) by using the modified private key ($Kpriv_N$), in order to compute the digital signature ($S_M$) of the message M.

3. The method according to claim 2, wherein the first element (E1) computes the digital signature ($S_M$) of the message M by performing a mathematical operation that takes as inputs said N portions of the digital signature ($S_{Mi}$) and said last portion ($S_{Mf}$) of the digital signature ($S_M$), said mathematical operation reconstructing the private key (Kpriv) of the first element (E1).

4. The method according to claim 2 or 3, wherein, the N second elements ($E2_i$) being composed of a part A of second elements ($E2_i$) and a part B of second elements ($E2_j$), with only the second elements ($E2_i$) of the part A capable of computing a digital signature,
each second element ($E2_j$) of the part B transmits the attribute value ($X_j$) stored in said second element ($E2_j$) to another second element ($E2_i$) of the part A and delegates the computation of the portion of the signature ($S_{Mj}$) corresponding to said second element ($E2_j$) of the part B to said other second element ($E2_i$) of the part A.

5. The method according to any of claims 1 to 4, wherein
each second element ($E2_i$) emits ($S20_i$) a radio signal ($SIG_i$) and determines a neighborhood information ($NB\_INFO(E2_i)$) by using the N-1 radio signals ($SIG_j$) received from the N-1 other second elements ($E2_j$);
the neighborhood information ($NB\_INFO(E2_i)$) determined by each second element ($E2_i$) is compared (S26) with a reference neighborhood information ($NB\_INFO(E2_i)_{ref}$), in order to check that the relative positions of the second elements ($E2_i$) are correct.

6. The method according to any of claims 1 to 5, wherein, for each of the N second elements ($E2_i$), at least one characteristic of said second element ($E2_i$), of the group including a position, a volume, a weight and a temperature, is determined and compared to a reference value or range, in order to check the system (100).

7. A method for configuring a system (100) of a first element (E1) grouped with N second elements ($E2_i$), with N≥1, a public and private key pair (Kpub, Kpriv) being attributed to the first element (E1), comprising the following steps:

   - initially storing (S0) said private key (Kpriv) in the first element (E1);
   - for each of the N second elements ($E2_i$), providing (S2) an attribute value ($X_i$) to said second element ($E2_i$), storing (S3) said attribute value ($X_i$) in said second element ($E2_i$) and modifying (S4) the private key (Kpriv) of the first element (E1) with the attribute value ($X_i$).

8. The method according to claim 7, wherein the steps of attributing (S2), storing (S3) and modifying (S4), performed for each second element ($E2_i$), are executed upon grouping said second element ($E2_i$) with the first element (E1).

9. The method according to any of claims 7 and 8, wherein, in case that a second element ($E2_i$) is removed from the system (100) in an authorized manner, the modified private key ($Kpriv_N$) stored in the first element (E1) is updated so as to remove the modification with the attribute value ($X_i$) of said removed second element ($E2_i$).

10. The method according to any of claims 7 to 9, wherein the attribute value ($X_i$) of each second element ($E2_i$) is defined by at least one value of the group including a random value ($X_i$), a physical characteristic value and a position value.

11. A system (100) of a first element (E1) grouped with N second elements ($E2_i$), with N≥1, a public and private key pair (Kpub, Kpriv) being attributed to the first element (E1), wherein

   - each of the N second elements ($E2_i$) has a memory storing ($22_i$) an attribute value ($X_i$) of said second element (E2i),
   - the first element (E1) has

     . a memory (12) storing a modified private key ($Kpriv_N$) corresponding to said private key (Kpriv) modified with the N attribute values ($X_i$), and
     . hardware means (14) and software means (13) for receiving (S11) a request (REQ[M]) to sign a message M from a sender (200), computing (S12) a digital signature ($S_M$) of said message M by using said modified private key ($Kpriv_N$) and said N attribute values ($X_i$) of the N second elements ($E2_i$), and transmitting (S13) the computed digital signature ($S_M$) to the sender (200), in order to allow the sender (200) to check the computed digital signature ($S_M$) with the public key (Kpub) of the first element (E1).

12. The system according to claim 11, wherein the first element (E1) has hardware means (14) and software means (13) for receiving N portions ($S_{Mi}$) of the digital signature ($S_M$), respectively computed using the N attribute values ($X_i$) of the N second elements ($E2_i$), and for computing a last portion ($S_{Mf}$) of the digital signature ($S_M$) by using the modified private key ($Kpriv_N$), in order to compute said digital signature ($S_M$) of the message M.

13. The system according to claim 11 or 12, wherein
the N second elements ($E2_i$) are composed of a part A of second elements ($E2_i$) and a part B of second elements ($E2_j$),
only the second elements ($E2_i$) of the part A have hardware means (14) and software means (13) for computing a digital signature,
each second element ($E2_j$) of the part B is configured to transmit the attribute value ($X_i$) stored in said second element ($E2_j$) to another second element ($E2_i$) of the part A and delegate the computation of the portion ($S_{Mj}$) of the signature ($S_M$) corresponding to said second element ($E2_j$) of the part B to said other second element ($E2_i$) of the part A.

14. The system according to any of claims 11 to 13, wherein
each second element ($E2_i$) has a radio transceiver ($21_i$) for emitting a radio signal ($SIG_i$) and receiving N-1 radio signals ($SIG_j$) from the N-1 other second elements ($E2_j$) and is configured to determine a neighborhood information ($NB\_INFO(E2_i)$) by using the N-1 received radio signals ($SIG_j$);
the first element ($E2_i$) stores in memory, a reference neighborhood information ($NB\_INFO(E2_i)_{ref}$) for each of the N second elements ($E2_i$).

15. The system according to any of claims 11 to 14, wherein the first element (E1) is a container or a support and the N second elements ($E2_i$) are put inside or on the first element (E1) respectively.

**FIG. 1**

**FIG. 2**

**200**　　　　　　　　　　**E1**　　　　　　　　　　　　**E2$_i$**

S11

S10　Tr REQ[M] $\longrightarrow$ Rcv REQ[M]

S12

S121i

S120　Tr M $\longrightarrow$ Rcv M

S122i　Compute S$_{Mi}$

S123i　Tr S$_{Mi}$

S124i　Rcv S$_{Mi}$ $\longleftarrow$

S125　Compute S$_{Mf}$

S126　Compute S$_{M}$

S14　Rcv M|S$_{M}$ $\longleftarrow$ S13　Tr M|S$_{M}$

**FIG. 3**

**200**        **E1**        **E2$_i$**

Emit SIG$_i$ — S20i

Collect SIG$_j$
$1 \leq j \leq N$ and $j \neq i$ — S21i

RSSI of E2$_j$
$1 \leq j \leq N$ and $j \neq i$ — S22i

Filter the m
strongest — S23i

i=i+1

S25 — Collect NB_INFO(E2$_i$)
$\forall i, 1 \leq i \leq N$ ←— Tr NB_INFO(E2$_i$) — S24i

S26 — NB_INFO(E2$_i$)=
NB_INFO(E2$_i$)$_{ref}$ ?

No — S27

S28 — Rcv ALERT ←— Tr ALERT

yes

S29 — i = N ?

no

yes

S31 — Rcv REPORT ←— Tr REPORT — S30

**FIG. 4**

Europäisches
Patentamt

European
Patent Office

Office européen
des brevets

# EUROPEAN SEARCH REPORT

Application Number

EP 21 15 5539

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/180291 A1 (SCHMELING JAMES L [US] ET AL) 13 June 2019 (2019-06-13) * claim 1; figure 6 * ----- | 1-15 | INV. G06Q30/00 |
| X | US 8 620 821 B1 (GOLDBERG ROBERT M [US] ET AL) 31 December 2013 (2013-12-31) * claim 1 * ----- | 1-15 | |
| X | WO 02/35341 A2 (ERICSSON INC [US]; DENT PAUL [US] ET AL.) 2 May 2002 (2002-05-02) * claim 1; figures 4,6 * ----- | 1-15 | |
| X | EP 2 498 438 A1 (CERTICOM CORP [CA]) 12 September 2012 (2012-09-12) * claim 1; figure 6 * ----- | 1-15 | |
| X | US 2011/194694 A1 (STRUIK MARINUS [CA]) 11 August 2011 (2011-08-11) * claim 1; figure 3 * ----- | 1-15 | |
| | | | TECHNICAL FIELDS SEARCHED (IPC) |
| | | | G06Q |

The present search report has been drawn up for all claims

| Place of search | Date of completion of the search | Examiner |
|---|---|---|
| Munich | 13 October 2021 | May, Michael |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

&.............................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 21 15 5539

This annex lists the patent family members relating to the patent documents cited in the above-mentioned European search report.
The members are as contained in the European Patent Office EDP file on
The European Patent Office is in no way liable for these particulars which are merely given for the purpose of information.

13-10-2021

| Patent document cited in search report | | | Publication date | Patent family member(s) | | | Publication date |
|---|---|---|---|---|---|---|---|
| US 2019180291 | A1 | | 13-06-2019 | NONE | | | |
| US 8620821 | B1 | | 31-12-2013 | NONE | | | |
| WO 0235341 | A2 | | 02-05-2002 | AT | 292301 | T | 15-04-2005 |
| | | | | AU | 1126002 | A | 06-05-2002 |
| | | | | DE | 60109805 | T2 | 04-05-2006 |
| | | | | EP | 1330702 | A2 | 30-07-2003 |
| | | | | JP | 2004512570 | A | 22-04-2004 |
| | | | | US | 6769062 | B1 | 27-07-2004 |
| | | | | WO | 0235341 | A2 | 02-05-2002 |
| EP 2498438 | A1 | | 12-09-2012 | CA | 2770001 | A1 | 07-09-2012 |
| | | | | EP | 2498438 | A1 | 12-09-2012 |
| US 2011194694 | A1 | | 11-08-2011 | NONE | | | |

EPO FORM P0459

For more details about this annex : see Official Journal of the European Patent Office, No. 12/82